# EUROPEAN PATENT SPECIFICATION

(11) **EP 1 621 416 B1**
(45) Date of publication and mention of the grant of the patent: **22.02.2012**
(21) Application number: 05015875.7
(22) Date of filing: 21.07.2005
(51) Int. Cl.: B60R 21/205

(54) **Airbag unit and case of the unit**
Airbageinheit und Gehäuse dafür
Unité de sac gonflable et boîtier de celle-ci

(30) Priority: 30.07.2004 JP 2004223930
(43) Date of publication of application: 01.02.2006
(73) Proprietor: TAKATA CORPORATION, Minato-ku, Tokyo 106-8510 (JP)
(72) Inventor: Tsujimoto, Kei, Tokyo 106-8510 (JP); Matsui, Yoshitaka, Tokyo 106-8510 (JP); Nakazawa, Wataru, Tokyo 106-8510 (JP)
(74) Representative: Banzer, Hans-Jörg

(56) References cited:
- EP-A2- 1 203 703
- JP-A- 11 042 994
- US-B1- 6 336 661

## Description

The present invention relates to airbag units used for protecting passengers and the like in vehicles, and relates to cases for accommodating airbags of the airbag units. In particular, the present invention relates to cases capable of absorbing shock by deforming in response to external force, and relates to airbag units including the cases.

Airbag units for passengers installed in instrument panels in vehicles each include a case, an airbag accommodated in the case, an inflator for expanding the airbag, and the like.

A structure having a retractable sliding member fastened with rivets or bolts on a side wall of a case is disclosed in Japanese Unexamined Patent Application Publication No. 11-42994. When an object hits on an instrument panel, the sliding member retracts by sliding along the side wall of the case.

According to the airbag unit disclosed in Japanese Unexamined Patent Application Publication No. 11-42994, strong resistance, for example, caused when an end portion of the sliding member digs into the side wall of the case, may occur during the retraction of the sliding member.

US 6,336,661 B1 discloses a case of an airbag apparatus according to the preamble of claim 1.

The object of the present invention is to provide a case of an airbag unit including a movable component that can always retract smoothly when an external force is applied. Also, the object of the present invention is to provide an airbag unit including the case.

According to the present invention, this object is achieved by a case of an airbag unit according to claim 1 and an airbag unit according to claim 9. The dependent claims define preferred and advantageous embodiments of the invention.

According to the case of the present invention, a storage room for accommodating an airbag and an opening facing a vehicle cabin includes a case body having a base disposed opposite to the opening, and a movable component being at least part of an end portion of the opening and retractable toward the base along the case body in response to an external force applied to the case. The case is characterized in that an end portion of the movable component adjacent to the base is deformed outward from the case body so as to be remote from the case body.

According to another aspect of the present invention, at least part of the end portion of the movable component adjacent to the base end can be located adjacent to the vehicle cabin and can be remote from an edge of the case body adjacent to the opening before the movable component retracts.

According to yet another aspect of the present invention, the movable component can be disposed so as to retract along the outer surface of the case body, and the end portion of the movable component adjacent to the base end can be deformed outward from the case.

According to yet another aspect of the present invention, the end portion of the movable component adjacent to the base end can be bent relative to a main panel of the movable component, the bending angle being less than or equal to 90°.

According to yet another aspect of the present invention, the case body can comprise a comb-shaped wall including several pillars which are deformable in response to the external force applied to the case, the movable component being disposed on an outer wall of the comb-shaped wall.

According to the airbag unit of the present invention, an airbag unit includes the case according to the present invention, an airbag accommodated in the case, and an inflator for expanding the airbag.

In the case and the airbag unit including the case according to the present invention, the end portion of the movable component adjacent to the base end is deformed (for example, bent) so as to be remote from the case body. Accordingly, during the retraction of the movable component in response to the external force generated when an object hits on the instrument panel, the rear end portion of the movable component is not subjected to strong resistance from the case body, resulting in smooth retraction of the movable component.

The present invention is preferably applied to a case where at least part of the end portion of the movable component adjacent to the base end is located adjacent to the vehicle cabin and is remote from the case body. With this structure, even when the end portion of the movable component adjacent to the base end comes into contact with the edge of the case body, the movable component can be smoothly guided to the side surface of the case body by the deformed rear end portion, and can smoothly retract along the case body.

According to the present invention, the movable component is disposed so as to retract along the outer surface of the case body, and that the end portion of the movable component adjacent to the base end is deformed outward from the case. As a result, the movable component and the deformed end portion adjacent to the base end smoothly retract without interfering the airbag in the case.

An embodiment of the present invention will now be described in detail with reference to the accompanying drawings.
Fig. 1 is a perspective view of a case of an airbag unit for passengers according to an embodiment of the present invention.
Fig. 2 is a perspective view of a movable component of the case.
Fig. 3 is a cross-sectional view taken along line III - III in Fig. 2.
Fig. 4 is a perspective view of a case body.
Fig. 5 is a longitudinal sectional view of the airbag unit.
Fig. 6 is a longitudinal sectional view of the airbag unit during the hit of an object.

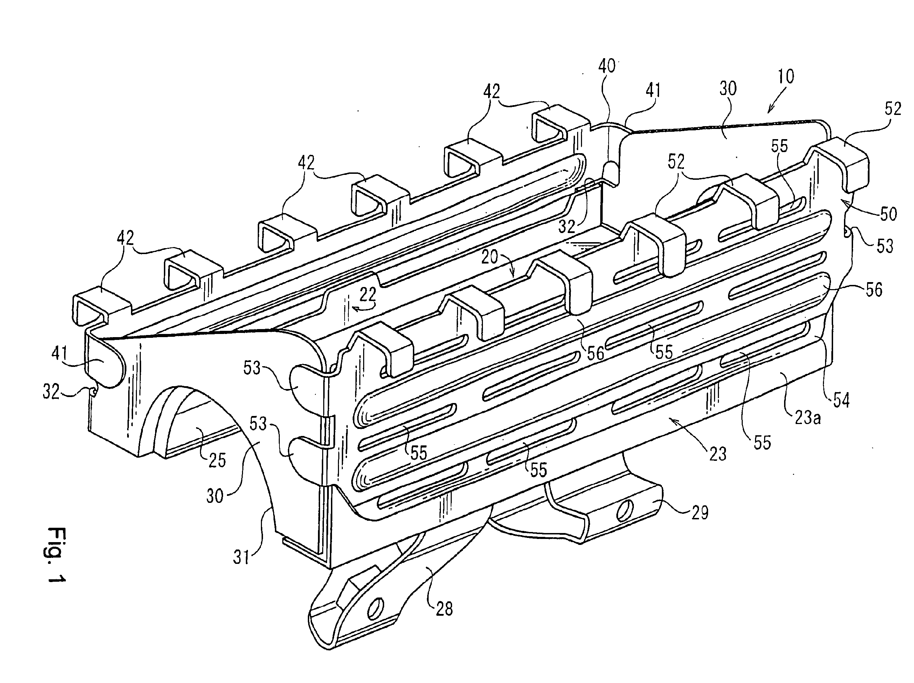

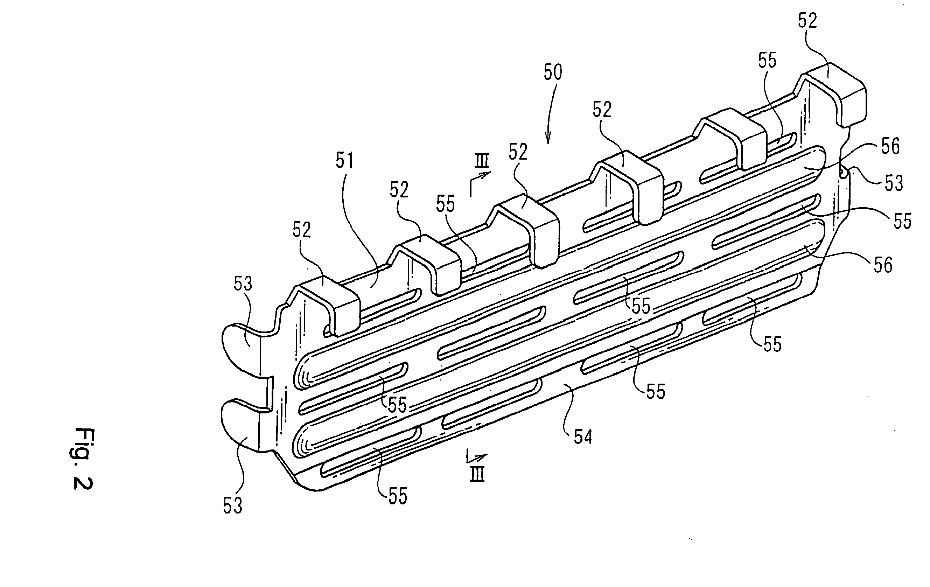

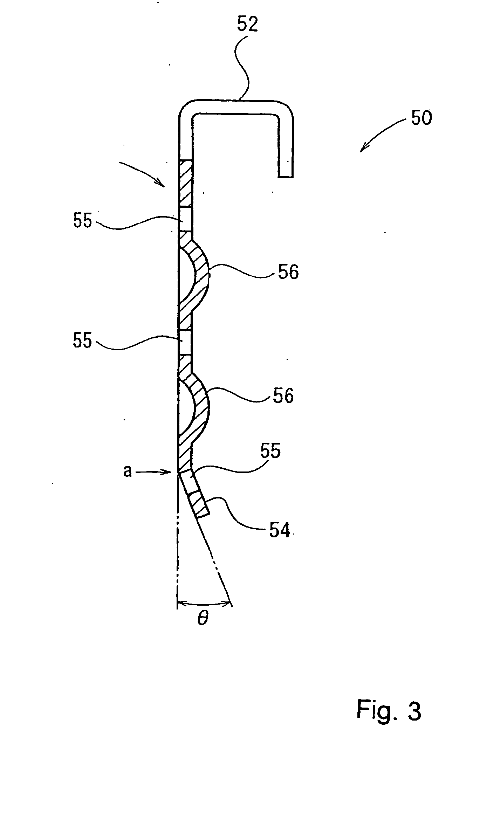

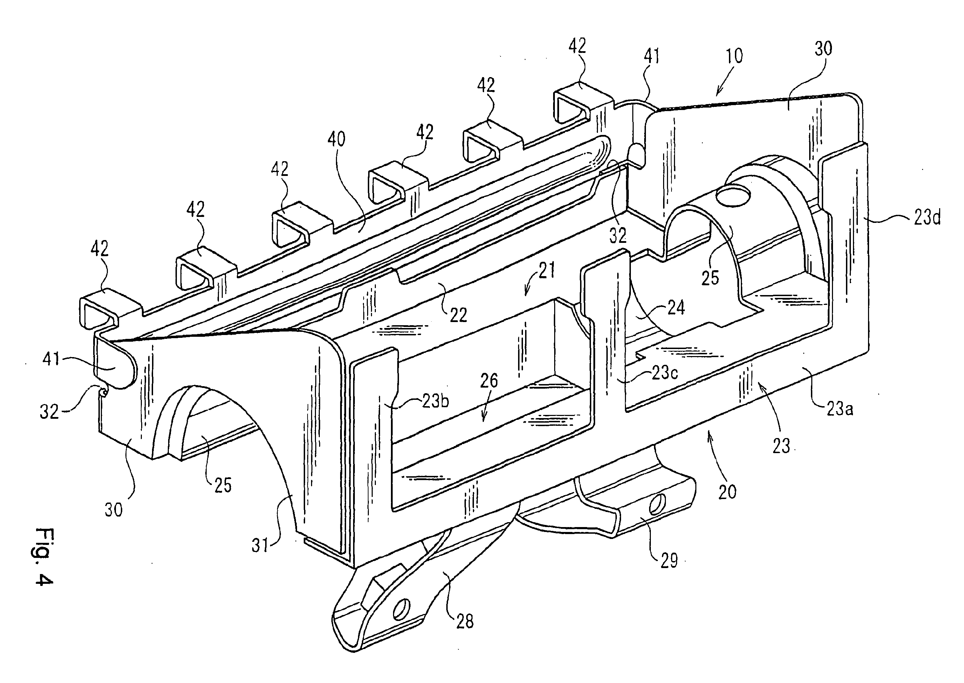

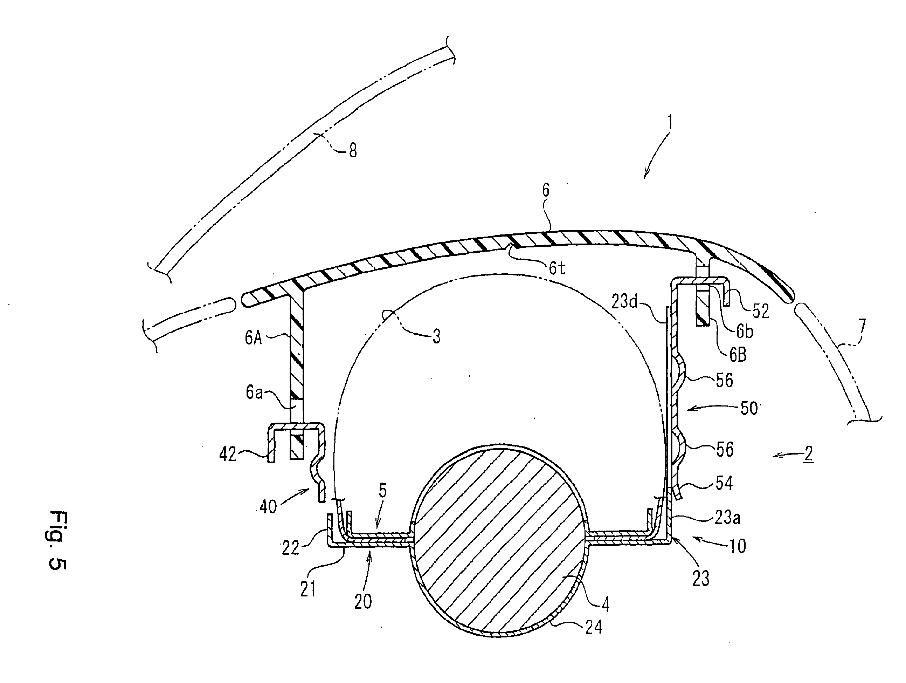

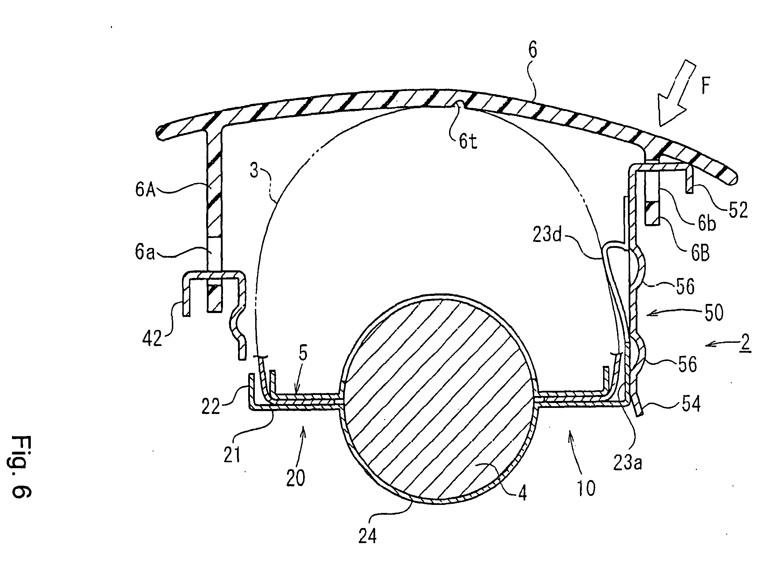

Fig. 1 is a perspective view of a case of an airbag unit for passengers according to an embodiment of the present invention; Fig. 2 is a perspective view of a movable component of the case; Fig. 3 is a cross-sectional view taken along line III - III in Fig. 2; Fig. 4 is a perspective view of a case body; Fig. 5 is a longitudinal sectional view of the airbag unit; and Fig. 6 is a longitudinal sectional view of the airbag unit during the hit of an object. In this embodiment, the airbag unit is disposed in an instrument panel such that the case has an opening substantially at the top as shown in Fig. 5. Accordingly, the upper side of each figure, which is adjacent to a vehicle cabin, corresponds to the top of the airbag unit, whereas the lower side of each figure to the bottom of the airbag unit.

With reference to Fig. 5, an airbag unit 1 includes a case 2, an folded airbag 3 accommodated in the case 2, an inflator 4 for expanding the airbag 3, an attachment frame 5 for attaching the airbag 3 and the inflator 4 to the case 2, and a lid 6 covering the case 2.

This case 2 includes a case body 10 and a movable component 50 attached to the case body 10 shown in Figs. 2 and 3. With reference to Figs. 4 and 5, this case body 10 includes a base 20 to which side plates 30 disposed at the left and the right and a hook plate 40 are attached.

The base 20 includes a bottom section 21, a wall 22 extending upward from a long side of the bottom section 21, a comb-shaped wall 23 extending upward from the other long side of the bottom section 21, semicylindrically concave portions 24 and semicylindrically convex portions 25 in the bottom section 21, and a concave portion 26 hollowed around the center of the bottom section 21. Brackets 28 and 29 with which the airbag unit is attached to a vehicle are fixed to the lower surface of the base 20 by welding.

The airbag unit 1 is mounted in a vehicle such that the wall 22 is adjacent to the front of the vehicle and such that the comb-shaped wall 23 is adjacent to the back of the vehicle.

The comb-shaped wall 23 includes a lower portion 23a extending along the bottom section 21, pillars 23b and 23d extending upward from both sides of the lower portion 23a in the longitudinal direction, and a pillar 23c extending upward at the intermediate position between the pillars 23b and 23d. However, the number and the positions of the pillars are not limited to those described above.

The semicylindrical portions 24 and 25 have quite similar radii, and are coaxially disposed. The inflator 4 is cylindrical, and is disposed such that the end portions are each fitted into a space between each pair of the semicylindrical portions 24 and 25.

As shown in Fig. 5, an end portion of a gas inlet of the airbag 3 and the inflator 4 are held between the attachment frame 5 and the base 20. The attachment frame 5 is fixed to the base 20 with bolts or rivets (not shown).

The side plates 30 are side walls disposed at the left and the right of the case body 10. The left and the right correspond to the left and the right of the vehicle when the airbag unit is put in the instrument panel.

A semicircular cut-off portion 31 having a radius slightly larger than that of the semicylindrical portions 25 of the base 20 is provided at the lower end of each side plate 30. An anchoring piece 32 extending from one side of each side plate 30 is bent. These anchoring pieces 32 are overlapped on the outer surface of the wall 22 of the base 20 and fixed to the wall 22 by spot welding such that the side plates 30 are fixed to base 20. No anchoring piece is formed at the other side of each side plate 30, and the other side of each side plate 30 is not linked to the comb-shaped wall 23 (free). The side plates 30 are located outward from the bottom section 21 of the base 20.

As described above, the side plates 30 are linked to the base 20 only through the anchoring pieces 32 fixed to the wall 22, and are not linked to the comb-shaped wall 23. Moreover, the side plates 30 are located outward from the bottom section 21. Therefore, when a downward external force is applied to the side plates 30, the side plates 30 are deformed around the anchoring pieces 32 such that portions adjacent to the comb-shaped wall 23 are pressed downward.

The hook plate 40 extends along the wall 22 above the wall 22. Anchoring pieces 41 extending from both ends of the hook plate 40 in the longitudinal direction are bent. These anchoring pieces 41 are fixed to the side plates 30 by spot welding such that the hook plate 40 is fixed to the side plates 30.

A plurality of hooks 42 protrude from the upper end of the hook plate 40 in the longitudinal direction with a predetermined spacing therebetween. The hooks 42 extend slightly upward from the hook plate 40, then bend outward from the case body 10, and subsequently bend downward.

With reference to Fig. 2, the movable component 50 includes an approximately rectangular main plate 51, a plurality of hooks 52 protruding from the upper end of the main plate 51, nail-shaped anchoring pieces 53 bent from the left and the right of the main plate 51 at approximately right angles, a deformed section 54 formed at the lower portion of the main plate 51, slits 55 and ribs 56 formed on the main plate 51. The slits 55 and the ribs 56 extend parallel to the long sides of the main plate 51. However, the shapes of the slits and ribs are not limited to those described above.

The hooks 52 have similar profiles to the hooks 42, and are disposed on the upper end of the main plate 51 in the longitudinal direction with a spacing therebetween.

In this embodiment, two anchoring pieces 53 are disposed at each side of the main plate 51. However, the number is not limited to this.

The deformed section 54 is formed by bending a lower end portion of the main plate 51 such that the lower end portion is remote from the comb-shaped wall 23. In this embodiment, the lower end portion of the main plate 51 is bent by an angle θ along a bending line a (see Fig. 3) parallel to the lower side of the main plate 51 so as to form the deformed section 54. This angle θ is preferably 90° or less. The deformed section 54 may be formed by curving the lower end portion of the main plate 51.

The movable component 50 is disposed along the outer surface of the comb-shaped wall 23 of the base 20, and also the anchoring pieces 53 are disposed along the outer surfaces of the side plates 30. The anchoring pieces 53 are then fixed to the side plates 30 by spot welding. In addition, the main plate 51 is fixed to upper portions of the pillars 23b, 23c, and 23d of the comb-shaped wall 23 by spot welding.

As shown in Fig. 5, the lid 6 is attached to the case 2 so as to cover the folded airbag 3 accommodated in the case 2. A leg 6A adjacent to the front of the vehicle and a leg 6B facing the back of the vehicle protrude from the back side of the lid 6, and the hooks 42 and 52 are caught in holes 6a and 6b formed in the legs 6A and 6B, respectively. The lid 6 includes a tear line 6t to be torn when the airbag 3 is expanded by the activation of the inflator 4.

The airbag unit 1 having the above-described structure is installed such that the lid 6 is flush with an instrument panel 7, and the brackets 28 and 29 are fixed to vehicle members (not shown) by bolts and the like.

When an external force is applied to the lid 6 of the airbag unit 1 in the vicinity of the movable component 50 due to the hit of an object as indicated by an arrow F shown in Fig. 6, the movable component 50 is pushed by this external force and retracts (moves downward in this embodiment). At this time, the pillars 23b, 23c, and 23d of the comb-shaped wall 23 are deformed so as to be buckled.

Moreover, the side plates 30 are deformed around the bases of the anchoring pieces 32 such that the portions adjacent to the comb-shaped wall 23 are pressed downward.

Even though the movable component 50 moves downward, the lower portion 23a of the comb-shaped wall 23 does not move downward due to the firm support of the bottom section 21. As a result, the movable component 50 moves downward while sliding on the outer surface of the lower portion 23a.

The deformed section 54 is formed in the lower end portion of the movable component 50 such that the deformed section 54 is remote from the comb-shaped wall 23. Accordingly, the movable component 50 is not caught in the upper end of the lower portion 23a, and can smoothly move downward. As a result, the pillars 23b to 23d and the side plates 30 can be successfully deformed, and shock occurring when an object hits on the lid in the vicinity of the movable component 50 or on the instrument panel can be sufficiently absorbed.

The above-described embodiment is an example of the present invention, and embodiments other than that shown in the drawings are possible. For example, the comb-shaped wall 23 may be a relatively weak wall-shaped component.

## Claims

1. A case (2) of an airbag unit (1) having a storage room for accommodating an airbag (3) and an opening facing a vehicle cabin, comprising:
a case body (10) having a base (20) disposed opposite to the opening; and
a movable component (50) being at least part of an end portion of the opening and retractable toward the base (20) along the case body (10) in response to an external force (F) applied to the case (2),
**characterized in that**
an end portion (54) of the movable component (50) adjacent to the base (20) is deformed outward from the case body (10) so as to be remote from the case body, wherein the movable component is disposed so as to retract along the outer surface of the case body

2. The case (2) of the airbag unit (1) according to Claim 1, wherein
at least part of the end portion (54) of the movable component (50) adjacent to the base end is located adjacent to the vehicle cabin and is remote from an edge of the case body (10) adjacent to the opening before the movable component (50) retracts.

3. The case (2) of the airbag unit (1) according to Claim 1 or 2, wherein
the movable component (50) is disposed so as to retract along the outer surface of the case body (10); and
the end portion (54) of the movable component (50) adjacent to the base end is deformed outward from the case (2).

4. The case (2) of the airbag unit (1) according to any one of the preceding claims, wherein
the movable component (50) comprises a main plate (51) and the deformed end portion (54) of the movable component (50) is formed by bending a lower end portion of the main plate (51).

5. The case (2) of the airbag unit (1) according to claim 4, wherein
the lower end portion of the main plate (51) is bent by an angle (θ) along a bending line (a) parallel to the lower side of the main plate (51).

6. The case (2) of the airbag unit (1) according to claim 5, wherein
the bending angle (θ) is one of less than or equal to 90°.

7. The case (2) of the airbag unit (1) according to any one of the preceding claims, wherein
the case body (10) comprises a comb-shaped wall (23) including at least two pillars (23b, 23c, 23d), and the movable component (50) is disposed along the outer surface of said comb-shaped wall (23).

8. The case (2) of the airbag unit according to claim 7, wherein
the at least two pillars (23b, 23c, 23d) of the comb-shaped wall (23) are deformable in response to the external force (F) applied to the case (2).

9. An airbag unit (1) comprising:
the case (2) according to any one of Claims 1 to 8;
an airbag (3) accommodated in the case(2); and
an inflator (4) for expanding the airbag (3).

## Patentansprüche

1. Gehäuse (2) einer Airbageinheit (1), wobei diese einen Lagerraum zur Unterbringung eines Airbags (3) und eine einer Fahrzeugkabine zugewandte Öffnung aufweist, umfassend:
einen Gehäusekörper (10), welcher eine gegenüber der Öffnung angeordnete Basis (20) aufweist; und
eine bewegliche Komponente (50), welche zumindest Teil eines Endabschnitts der Öffnung und in Richtung der Basis (20) entlang des Gehäusekörpers (10) in Reaktion auf eine auf das Gehäuse (2) angewandte äußere Kraft (F) zurückziehbar ist,
**dadurch gekennzeichnet,**
**dass** ein Endabschnitt (54) der zu der Basis (20) benachbarten beweglichen Komponente (50) außerhalb des Gehäusekörpers (10) so deformiert ist, dass er von dem Gehäusekörper (10) fern ist, wobei die bewegliche Komponente so angeordnet ist, dass sie sich entlang der äußeren Oberfläche des Gehäusekörpers (10) zurückzieht.

2. Gehäuse (2) der Airbageinheit (1) nach Anspruch 1, wobei
zumindest ein Teil des Endabschnitts (54) der zu dem Basisende benachbarten beweglichen Komponente (50) benachbart zu der Fahrzeugkabine angeordnet ist und von einem Rand des zu der Öffnung benachbarten Gehäusekörpers (10) fern ist bevor sich die bewegliche Komponente (50) zurückzieht.

3. Gehäuse (2) der Airbageinheit (1) nach Anspruch 1 oder Anspruch 2, wobei
die bewegliche Komponente (50) so angeordnet ist, dass sie sich entlang der äußeren Oberfläche des Gehäusekörpers (10) zurückzieht; und
der Endabschnitt (54) der zu dem Basisende benachbarten beweglichen Komponente (50) außerhalb des Gehäuses (2) deformiert ist.

4. Gehäuse (2) der Airbageinheit (1) nach einem der vorhergehenden Ansprüche , wobei
die bewegliche Komponente (50) eine Hauptplatte (51) umfasst und der deformierte Endabschnitt (54) der beweglichen Komponente durch Biegung eines unteren Endabschnitts der Hauptplatte (51) ausgebildet ist.

5. Gehäuse (2) der Airbageinheit (1) nach Anspruch 4, wobei
der untere Endabschnitt (51) unter einem Winkel (θ) entlang einer Biegelinie (a) parallel zu der Unterseite der Hauptplatte (51) gebogen ist.

6. Gehäuse (2) der Airbageinheit (1) nach Anspruch 5, wobei
der Biegewinkel (θ) weniger oder gleich 90° ist.

7. Gehäuse (2) der Airbageinheit (1) nach einem der vorhergehenden Ansprüche, wobei
der Gehäusekörper (10) eine kammförmige Wand (23), welche zumindest zwei Pfeiler (23b, 23c, 23d) aufweist, umfasst und die bewegliche Komponente (50) entlang der äußeren Oberfläche der kammförmigen Wand (23) angeordnet ist.

8. Gehäuse (2) der Airbageinheit (1) nach Anspruch 7, wobei
die zumindest zwei Pfeiler (23b, 23c, 23d) der kammförmigen Wand (23) verformbar in Reaktion auf die äußere Kraft (F), welche auf das Gehäuse angewendet wird, sind.

9. Airbageinheit (1) umfassend:
das Gehäuse (2) nach einem der Ansprüche 1 bis 8;
einen in dem Gehäuse (2) untergebrachten Airbag (3); und
einen Gasgenerator (4) zum Ausdehnen des Airbags (3).

## Revendications

1. Un boitier (2) d'une unité d'airbag (1) comportant une chambre de stockage pour contenir un airbag (3) et une ouverture faisant face à une cabine de véhicule, comprenant:
- un corps de boitier (10) ayant une base (20) disposée à l'opposée de l'ouverture; et
- un composant mobile (50) étant au moins une partie d'une portion d'extrémité de l'ouverture et rétractable en direction de la base (20) le long du corps de boitier (10) en réponse à une force extérieure (F) appliquée au boitier (2),
**caractérisé en ce que**,
- une portion d'extrémité (54) du composant mobile (50) adjacente à la base (20) est déformée vers l'extérieur du corps de boitier (10) de façon à être éloignée du corps de boitier (10), le composant mobile (50) étant disposé de façon à se rétracter le long de la surface extérieure du corps du boitier (10).

2. Le boitier (2) de l'unité d'airbag (1) selon la revendication 1, dans lequel au moins une partie de la portion d'extrémité (54) du composant mobile (50) adjacente à l'extrémité de la base est située adjacente à la cabine de véhicule et est éloignée d'un bord du corps de boitier (10) adjacent à l'ouverture avant que le composant mobile (50) ne se rétracte.

3. Le boitier (2) de l'unité d'airbag (1) selon la revendication 1 ou 2, dans lequel le composant mobile (50) est disposé de façon à se rétracter le long de la surface extérieure du corps du boitier (10); et la portion d'extrémité (54) du composant mobile (50) adjacente à l'extrémité de la base est déformée vers l'extérieur du boitier (2).

4. Le boitier (2) de l'unité d'airbag (1) selon l'une quelconque des revendications précédentes, dans lequel le composant mobile (50) comprend une plaque principale (51) et la portion d'extrémité (54) déformée du composant mobile (50) est formée en fléchissant une portion d'extrémité inferieure de la plaque principale (51).

5. Le boitier (2) de l'unité d'airbag (1) selon la revendication 4, dans lequel la portion d'extrémité inferieure de la plaque principale (51) est fléchie selon un angle (θ) le long d'une ligne de fléchissement (a) parallèle au côté inferieur de la plaque principale (51).

6. Le boitier (2) de l'unité d'airbag (1) selon la revendication 5, dans lequel l'angle de fléchissement (θ) est l'un parmi moins que ou égal à 90°.

7. Le boitier (2) de l'unité d'airbag (1) selon l'une quelconque des revendications précédentes, dans lequel le corps du boitier (10) comprend une paroi en forme de peigne (23) incluant au moins deux piliers (23b, 23c, 23d), et le composant mobile (50) est disposé le long de la surface extérieure de ladite paroi en forme de peigne (23).

8. Le boitier (2) de l'unité d'airbag (1) selon la revendication 7, dans lequel les au moins deux piliers (23b, 23c, 23d) de la paroi en forme de peigne (23) sont déformables en réponse à la force extérieure (F) appliquée sur le boitier (2).

9. Une unité d'airbag (1) comprenant:
- le boitier (2) selon l'une quelconque des revendications 1 à 8;
- un airbag (3) introduit dans le boitier (2); et
- un gonfleur (4) pour gonfler l'airbag (3).
